# EUROPÄISCHE PATENTSCHRIFT

(11) **EP 1 772 179 B1**
(45) Veröffentlichungstag und Bekanntmachung des Hinweises auf die Patenterteilung: **01.01.2020**
(21) Anmeldenummer: 06017704.5
(22) Anmeldetag: 25.08.2006
(51) Int. Cl.: B01D 46/24, F16L 23/032

(54) **Befestigungsflansch**
Securing flange
Flasque de fixation

(30) Priorität: 07.10.2005 DE 102005048453
(43) Veröffentlichungstag der Anmeldung: 11.04.2007
(60) Teilanmeldung: 18211086.6
(73) Patentinhaber: WAIWELDAI Anlagentechnik GmbH, 97947 Grünsfeld (DE)
(72) Erfinder: Trost, Bärbel, 97947 Grünsfeld (DE)
(74) Vertreter: Wolf, Eckhard

(56) Entgegenhaltungen:
- EP-A1- 0 555 761
- EP-A1- 1 207 295
- EP-A2- 0 921 343
- WO-A2-2006/031298
- DE-A1- 19 827 297
- DE-C1- 4 304 036
- US-A- 5 190 321
- US-A1- 2003 213 522

## Beschreibung

Die Erfindung betrifft einen Filterkartuschenbefestigungsflansch mit mindestens zwei am Umfang des ringförmig ausgebildeten Flansches radial überstehenden, hakenartigen Vorsprüngen mit jeweils einer in gleicher Umfangsrichtung randoffenen Ausnehmung zur Aufnahme eines Befestigungsbolzens, wobei die jeweilige Ausnehmung der mindestens zwei Vorsprünge durch eine Drehung des Befestigungsflansches in Umfangsrichtung in Eingriff mit dem Befestigungsbolzen bringbar ist.

Luftfilteranlagen für industrielle Prozesse verwenden oftmals Filter mit einem Filtergehäuse mit einem Einlass für Pulver, Staub oder Schüttgut belastete Luft und einem Auslass für gefilterte Luft, wobei ein Filterelement zwischen Einlass und Auslass angeordnet ist, dass beispielsweise ein im Wesentlichen zylinderförmig angeordnetes Filtermedium aufweist. Da das Filterelement nach einer bestimmten Verwendungsdauer erneuert werden muss, kann es zweckmäßig als Kartusche mit einem mit dem Filtermedium verbundenen, beispielsweise verklebten Befestigungsflansch ausgebildet sein, wobei an dem Flansch Mittel zur lösbaren Befestigung in dem Filtergehäuse vorgesehen sind. Dabei ist es bekannt, am Umfang des Flansches hakenartige Vorsprünge anzuordnen, die jeweils eine in einer Umfangsrichtung randoffene Ausnehmung aufweisen, so dass diese beim Einsetzen der Filterkartusche in ein Filtergehäuse durch eine Drehung in Eingriff mit gehäusefesten Befestigungsbolzen gebracht werden können, woraufhin die Kartusche durch Anziehen von Befestigungsmuttern gesichert wird. Auf diese Weise ist ein schnelles und sicheres Austauschen der Filterkartuschen möglich. Bei bekannten Filterkartuschen dieser Art weisen die Ausnehmungen jedoch einen festen Zentrumsabstand auf, um so einen üblichen Befestigungslochkreis bedienen zu können. Für einen anderen Lochkreis ist die Herstellung eines entsprechend angepassten Flansches erforderlich, wodurch für die Verwendung von mehreren Filteranlagen mit unterschiedlichen Lochkreisanforderungen entsprechend unterschiedliche Filterkartuschen hergestellt bzw. bevorratet werden müssen.

Ausgehend hiervon besteht die Aufgabe der vorliegenden Erfindung darin, einen Filterkartuschenbefestigungsflansch der eingangs genannten Art zu schaffen, mit dem mehr als nur ein Befestigungslochkreis bedient werden kann.

Zur Lösung dieser Aufgabe wird die in Anspruch 1 angegebene Merkmalskombination vorgeschlagen. Vorteilhafte Weiterbildungen und Ausgestaltungen der Erfindung ergeben sich aus den abhängigen Ansprüchen.

Gemäß der Erfindung weisen die mindestens zwei Vorsprünge in der den randoffenen Ausnehmungen entgegen gesetzten Umfangsrichtung jeweils eine weitere in Umfangsrichtung randoffene Ausnehmung auf, wobei die in unterschiedliche Umfangsrichtungen weisenden Ausnehmungen unterschiedliche radiale Zentrumsabstände entsprechend unterschiedlichen Lochkreisdurchmessern der Befestigungsbolzen einnehmen. Während bisher wie bei Bajonettbefestigungen üblich das Befestigen in und das Lösen entgegen des Uhrzeigersinns erfolgt, stellt es für den Anwender kein Hindernis dar, diese Vorgänge in jeweils entgegen gesetzten Richtungen vorzunehmen, da bei einem Austausch der Filterkartusche eine gute Sichtbarkeit und Zugänglichkeit der Befestigungsteile gegeben ist. Somit können die Vorsprünge derart gestaltet werden, dass die Ausnehmungen für einen Lochkreisdurchmesser in die eine Umfangsrichtung und die Ausnehmungen für einen zweiten Lochkreisdurchmesser in die andere Umfangsrichtung weisen.

Grundsätzlich können zwei Vorsprünge mit entsprechenden Ausnehmungen für eine sichere Befestigung der Filterkartusche ausreichend sein. Bei Kartuschen mit größeren Durchmessern ist es jedoch sinnvoll wenn in vorteilhafter Ausgestaltung der Erfindung drei oder vier am Umfang des Flansches radial überstehende Vorsprünge vorgesehen sind. Selbstverständlich können auch noch mehr Vorsprünge vorgesehen werden, dies wird letztendlich durch die erforderliche Stabilität der Befestigung bestimmt sein.

In weiterer bevorzugter Ausgestaltung der Erfindung sind die randoffenen Ausnehmungen zumindest in einer Umfangsrichtung axial gestuft ausgebildet und bilden eine formschlüssige Aufnahme für eine Befestigungsmutter. Die verwendete Befestigungsmutter umfasst vorzugsweise eine gegenüber der Mutter drehbare Unterlegscheibe, und die Stufe ist an den Durchmesser der Unterlegscheibe angepasst.

In weiterer bevorzugter Ausgestaltung der Erfindung ist der Flansch zusammen mit den Vorsprüngen einstückig als Spritzgussteil aus einem Kunststoffmaterial hergestellt.

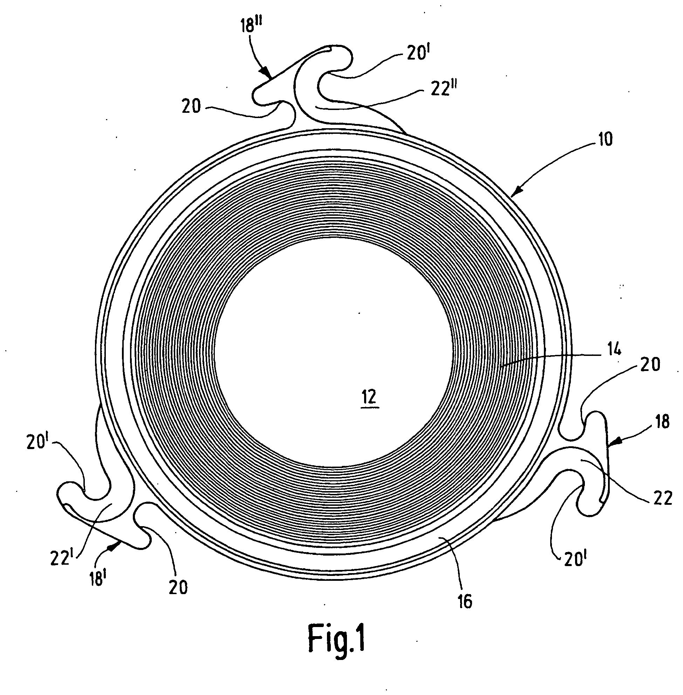

Im Folgenden wird die Erfindung anhand eines in der Zeichnung in schematischer Weise dargestellten Ausführungsbeispiels näher erläutert. Es zeigt
- Fig. 1: eine Draufsicht auf einen Befestigungsflansch einer Filterkartusche mit drei am Umfang angeordneten Vorsprüngen mit jeweils zwei nach entgegen gesetzten Umfangsrichtungen randoffenen Ausnehmungen.

Der in der Zeichnung in Draufsicht dargestellte Befestigungsflansch 10 einer Filterkartusche weist eine zentrale Durchtrittsöffnung 12 für den Austritt gefilterter Luft auf. Die Öffnung 12 ist von einem strukturierten, U-förmigen Aufnahmeprofil 14 umschlossen, in dem ein im Wesentlichen zylindrischer, in Umfangsrichtung Z-förmig gefalteter Filterkörper (nicht näher dargestellt) aus einem Filtermedium befestigt ist, beispielsweise durch Einkleben. Das Profil 14 ist von einem Ringflansch 16 umschlossen, an dessen Außenrand drei als Doppelhaken ausgebildete Vorsprünge 18, 18', 18" angeordnet sind, die jeweils zwei randoffene Ausnehmungen 20, 20' aufweisen, von denen die eine Ausnehmung 20 zu einer Umfangsrichtung hin und die andere Ausnehmung 20' zu der entgegen gesetzten Umfangsrichtung hin gewandt ist. Aus der Figur ist ersichtlich, dass die Ausnehmung 20 für einen kleineren Lochkreisdurchmesser bestimmt ist als die Ausnehmung 20'. Die Filterkartusche wird in ein Filtergehäuse eingesetzt, das eine Montageplatte für den Flansch 10 enthält, wobei an in der Montageplatte eine Durchtrittsöffnung für den Filterkörper vorgesehen ist und wobei an der Montageplatte Stehbolzen befestigt sind, die mit einer der Ausnehmungen 20, 20' zusammen wirken. Je nach dem Lochkreisdurchmesser der Stehbolzen wird der Flansch 10 zur Befestigung in die eine oder andere Richtung verdreht, bis die Stehbolzen am Boden der Ausnehmung 20, 20' anschlagen und eine Mutter gegen den Flansch 10 festgezogen werden kann. Bei dem dargestellten Ausführungsbeispiel weist der Vorsprung 18, 18', 18" im Bereich der Ausnehmung 20' eine Stufe 22, 22', 22" auf, die zur formschlüssigen Aufnahme einer an der Befestigungsmutter angeordneten Wellscheibe bestimmt ist. Grundsätzlich kann auch die Ausnehmung 20 bei entsprechender Gestaltung des Vorsprungs 18, 18', 18" von einer derartigen Stufe umrandet sein.

Zusammenfassend ist folgendes festzuhalten: Die Erfindung betrifft einen Befestigungsflansch 10, insbesondere für Filterkartuschen, mit mindestens zwei am Umfang des ringförmig ausgebildeten Flansches radial überstehenden Vorsprüngen 18, 18', 18" mit jeweils einer in gleicher Umfangsrichtung randoffener Ausnehmung 20 zur Aufnahme eines Befestigungsbolzens. Um einen derartigen Befestigungsflansch mit mehr als nur einem Befestigungslochkreis verwenden zu können, wird gemäß einer ersten Erfindungsvariante vorgeschlagen, dass die mindestens zwei Vorsprünge 18, 18', 18" in der den randoffenen Ausnehmungen 20 entgegen gesetzten Umfangsrichtung jeweils eine weitere in Umfangsrichtung randoffene Ausnehmung 20' aufweisen, wobei die in unterschiedliche Umfangsrichtungen weisenden Ausnehmungen 20, 20' unterschiedliche radiale Zentrumsabstände einnehmen. Zusätzlich kann jeder radial überstehende Vorsprung 18, 18', 18" derart elastisch verformbar am Umfang des Flansches 10 angeordnet sein, dass seine randoffene Ausnehmung 20, 20' bei elastischer Verformung unterschiedliche radiale Zentrumsabstände einnimmt.

## Patentansprüche

1. Filterkartuschenbefestigungsflansch mit mindestens zwei am Umfang des ringförmig ausgebildeten Flansches (10) radial überstehenden, hakenartigen Vorsprüngen (18, 18', 18") mit jeweils einer in gleicher Umfangsrichtung randoffenen Ausnehmung (20) zur Aufnahme eines Befestigungsbolzens, wobei die jeweilige Ausnehmung (20) der mindestens zwei Vorsprünge (18, 18', 18") durch eine Drehung des Befestigungsflansches in Umfangsrichtung in Eingriff mit dem Befestigungsbolzen bringbar ist, **dadurch gekennzeichnet, dass** die mindestens zwei Vorsprünge (18, 18', 18") in der den randoffenen Ausnehmungen (20) entgegen gesetzten Umfangsrichtung jeweils eine weitere in Umfangsrichtung randoffene Ausnehmung (20') aufweisen, wobei die in unterschiedliche Umfangsrichtungen weisenden Ausnehmungen (20, 20') unterschiedliche radiale Zentrumsabstände entsprechend unterschiedlichen Lochkreisdurchmessern der Befestigungsbolzen einnehmen.

2. Filterkartuschenbefestigungsflansch nach Anspruch 1, **dadurch gekennzeichnet, dass** drei oder vier am Umfang des Flansches (10) radial überstehende Vorsprünge (18, 18', 18") vorgesehen sind.

3. Filterkartuschenbefestigungsflansch nach Anspruch 1 oder 2, **dadurch gekennzeichnet, dass** die randoffenen Ausnehmungen (20, 20') zumindest in einer Umfangsrichtung axial gestuft ausgebildet sind und eine formschlüssige Aufnahme (22) für eine Befestigungsmutter bilden.

4. Filterkartuschenbefestigungsflansch nach einem der Ansprüche 1 bis 3, **dadurch gekennzeichnet, dass** der Flansch (10) zusammen mit den Vorsprüngen (18, 18', 18") einstückig als Spritzgussteil aus einem Kunststoffmaterial hergestellt ist.

## Claims

1. Filter cartridge fastening flange comprising at least two hook-like projections (18, 18', 18") which radially project on the circumference of the annular flange (10), each projection comprising a recess (20) which is open-edged in the same circumferential direction for receiving a fastening bolt, it being possible to bring the relevant recess (20) of the at least two projections (18, 18', 18") into engagement with the fastening bolt by means of rotating the fastening flange in the circumferential direction, **characterized in that** the at least two projections (18, 18', 18"), in the circumferential direction counter to the open-edged recesses (20), each comprise a further recess (20') which is open-edged in the circumferential direction, the recesses (20, 20') which point in different circumferential directions occupying different radial spacings from the center in accordance with different hole circle diameters of the fastening bolts.

2. Filter cartridge fastening flange according to claim 1, **characterized in that** three or four projections (18, 18', 18") which radially project on the circumference of the flange (10) are provided.

3. Filter cartridge fastening flange according to either claim 1 or claim 2, **characterized in that** the open-edged recesses (20, 20') are designed so as to be axially stepped at least in a circumferential direction and form an interlocking receptacle (22) for a fastening nut.

4. Filter cartridge fastening flange according to any of claims 1 to 3, **characterized in that** the flange (10) is produced as one piece together with the projections (18, 18', 18") as an injection molded part made of a plastics material.

## Revendications

1. Bride de fixation de cartouche de filtre comportant au moins deux saillies (18, 18', 18") en forme de crochets qui font saillie radialement de la circonférence de la bride (10) de forme annulaire, les saillies présentant chacune un évidement (20) ouvert sur le bord dans la même direction circonférentielle pour loger un boulon de fixation, chaque évidement (20) des au moins deux saillies (18, 18', 18") pouvant venir en prise avec le boulon de fixation par rotation de la bride de fixation dans la direction circonférentielle, **caractérisée en ce que** les au moins deux saillies (18, 18', 18") présentent chacune, dans la direction circonférentielle, un autre évidement (20') ouvert sur le bord dans la direction circonférentielle opposée aux évidements (20) ouverts sur le bord, les évidements (20, 20') orientés dans différentes directions circonférentielles occupant différentes distances centrales radiales correspondant aux différents diamètres du cercle des trous des boulons de fixation.

2. Bride de fixation de cartouche de filtre selon la revendication 1, **caractérisée en ce que** trois ou quatre saillies (18, 18', 18") faisant saillie radialement sont prévues au niveau de la circonférence de la bride (10).

3. Bride de fixation de cartouche de filtre selon la revendication 1 ou 2, **caractérisée en ce que** les évidements (20, 20') ouverts sur le bord sont réalisés de manière axialement étagée au moins dans une direction circonférentielle et forment un logement (22) à engagement positif pour un écrou de fixation.

4. Bride de fixation de cartouche de filtre selon l'une des revendications 1 à 3, **caractérisée en ce que** la bride (10) et les saillies (18, 18', 18") sont réalisées d'une seule pièce sous la forme d'une pièce moulée par injection en matière plastique.
